# EUROPEAN PATENT APPLICATION

(11) **EP 3 447 454 A1**
(43) Date of publication of application: **27.02.2019**
(21) Application number: 18189597.0
(22) Date of filing: 17.08.2018
(51) Int. Cl.: G01F 11/00, B01L 3/02, B01L 3/00

(54) **LIQUID DISPENSING APPARATUS**

(30) Priority: 22.08.2017 JP 2017159473
(71) Applicant: Toshiba TEC Kabushiki Kaisha, Tokyo 141-8562 (JP)
(72) Inventor: YOKOYAMA, Shuhei, Shinagawa-ku,, Tokyo 141-8562 (JP); KAIHO, Satoshi, Shinagawa-ku,, Tokyo 141-8562 (JP); KUSUNOKI, Ryutaro, Shinagawa-ku,, Tokyo 141-8562 (JP); SHIMIZU, Seiya, Shinagawa-ku,, Tokyo 141-8562 (JP)
(74) Representative: Takeuchi, Maya

(57) **Abstract**

A liquid dispensing apparatus includes a mounting unit on which a liquid discharging device is mounted, a driving circuit to supply driving power to an actuator of the liquid discharging device mounted on the mounting unit, and a controller configured to supply a first control signal to the driving circuit to drive the actuator of the liquid discharging device to discharge a liquid, and supply a second control signal to the driving circuit after a discharge of the liquid to cause the driving circuit to damage the actuator.

## Description

### FIELD

Embodiments described herein relate generally to a liquid dispensing apparatus.

### BACKGROUND

In a liquid dispensing apparatus, a liquid is dispensed through a liquid discharging device. The liquid discharging device can be detachable from the liquid dispensing apparatus so that it can be discarded after a single use to prevent contamination.

However, there is a problem in existing dispensing systems in that the discharging device might be reused or kept in service even though the discharging device is designed, or at least intended, only for single usage.

### SUMMARY OF INVENTION

To solve the above-cited problems, there is provided a liquid dispensing apparatus, comprising:
a mounting unit on which a liquid discharging device is to be mounted;
a driving circuit to supply driving power to an actuator of the liquid discharging device mounted on the mounting unit; and
a controller configured to:
   supply a first control signal to the driving circuit to drive the actuator of the liquid discharging device to discharge a liquid; and
   supply a second control signal to the driving circuit after a discharge of the liquid to cause the driving circuit to damage the actuator.

Preferably the driving circuit may supply a first driving voltage signal in response to the first control signal and a second driving voltage signal in response to the second control signal, the second driving voltage signal having a maximum voltage level greater than a maximum voltage level of the first driving voltage signal and the maximum voltage level of the second driving voltage signal is sufficient to cause a dielectric breakdown in the actuator.

Preferably the driving circuit may supply a first driving voltage signal in response to the first control signal and a second driving voltage signal in response to the second control signal, the second driving voltage signal having a frequency coinciding with a resonance frequency of the actuator.

Preferably the liquid dispensing apparatus may further comprise:
a capacitance measuring circuit configured to measure a capacitance value of the actuator, wherein
the controller is configured to acquire a capacitance value with the capacitance measuring circuit before supplying the first control signal and supply the first control signal only if the capacitance value is above a predetermined threshold.

Preferably the liquid dispensing apparatus may further comprise:
an interface for connecting the capacitance measuring circuit and the driving circuit, wherein
the liquid discharging device comprises a pair of wiring patterns for connecting the driving circuit and the actuator, and
the capacitance measuring circuit measures a capacitance value between the pair of wiring patterns.

Preferably the actuator may be formed of a piezoelectric film.

Preferably the actuator may be formed of a heater.

In another exemplary embodiment, there is also provided a liquid dispensing apparatus, comprising:
a liquid discharging device;
a mounting unit on which the liquid discharging device is mounted;
a driving circuit to supply driving power to the liquid discharging device mounted on the mounting unit; and
a controller configured to supply:
   a first control signal to cause the liquid discharging device to discharge a liquid, and
   a second control signal to damage the liquid discharging device, wherein
   the liquid discharging device comprises an actuator configured to discharge a liquid based on the first control signal from the controller.

Preferably the driving circuit may supply to the actuator:
a first driving voltage signal in response to the first control signal,
a second driving voltage signal in response to the second control signal,
the second driving voltage signal has a maximum voltage level greater than a maximum voltage level of the first driving voltage signal and the maximum voltage level of the second driving voltage signal is sufficient to cause a dielectric breakdown in the actuator.

Preferably the driving circuit may supply a first driving voltage signal in response to the first control signal and a second driving voltage signal in response to the second control signal, the second driving voltage signal having a frequency coinciding with a resonance frequency of the actuator.

Preferably the liquid dispensing apparatus may further comprise:
a capacitance measuring circuit configured to measure a capacitance value of the actuator, wherein
the controller is configured to acquire a capacitance value with the capacitance measuring circuit before supplying the first control signal and supply the first control signal only if the capacitance value is above a predetermined threshold.

Preferably the liquid dispensing apparatus may further comprise:
an interface for connecting the capacitance measuring circuit and the driving circuit, wherein
the liquid discharging device comprises a pair of wiring patterns for connecting the driving circuit and the actuator, and the capacitance measuring circuit measures a capacitance value between the pair of wiring patterns.

Preferably the actuator may be formed of a piezoelectric film.

Preferably the actuator may be formed of a heater.

In yet another exemplary embodiment there is also provided a method for discharging a liquid from a liquid dispensing apparatus, comprising:
determining a liquid discharging device is mounted on a liquid dispensing apparatus;
acquiring a capacitance value of an actuator of the liquid discharging device;
receiving a discharge signal through an interface;
supplying a first control signal to a driving circuit of the liquid dispensing apparatus to drive the actuator of the liquid discharging device to discharge a liquid only if the acquired capacitance value is above a predetermined threshold; and
supplying a second control signal to damage the actuator after a discharge of the liquid.

Preferably the driving circuit may supply a first driving voltage signal in response to the first control signal and a second driving voltage signal in response to the second control signal, the second driving voltage signal having a maximum voltage level greater than a maximum voltage level of the first driving voltage signal and the maximum voltage level of the second driving voltage signal is sufficient to cause a dielectric breakdown in the actuator.

Preferably the driving circuit may supply a first driving voltage signal in response to the first control signal and a second driving voltage signal in response to the second control signal, the second driving voltage signal having a frequency coinciding with a resonance frequency of the actuator.

Preferably the method may further comprise:
transmitting a signal indicating the liquid dispensing apparatus has been used through the interface if the acquired capacitance value is below the predetermined threshold.

Preferably the actuator may be formed of a piezoelectric film.

Preferably the actuator may be formed of a heater.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a schematic perspective view of a discharging system according to a first embodiment.
FIG. 2 is a top view of a liquid discharging device according to the first embodiment.
FIG. 3 is a bottom view of a bottom surface of the liquid discharging device according to the first embodiment.
FIG. 4 is a cross-sectional view taken along a line F4-F4 of FIG. 2.
FIG. 5 is a cross-sectional view taken along a line F5-F5 of FIG. 4.
FIG. 6 is a block diagram of a control system of a discharging system according to the first embodiment.
FIG. 7 is a diagram of a connection example of a driving circuit according to the first embodiment.
FIG. 8 is a diagram of a connection example of a driving circuit according to the first embodiment.
FIG. 9 is a flowchart of an operation example of a chemical liquid dispensing apparatus according to the first embodiment.
FIG. 10 is a cross-sectional view taken along a line F10-F10 of FIG. 4 according to a second embodiment.
FIG. 11 is a diagram of a connection example of a driving circuit according to the second embodiment.
FIG. 12 is a diagram of a connection example of a driving circuit according to the second embodiment.
FIG. 13 is a flowchart of an operation example of a chemical liquid dispensing apparatus according to the second embodiment.

### DETAILED DESCRIPTION

In general, according to the embodiment, a liquid dispensing apparatus includes a mounting unit on which a liquid discharging device is mounted, a driving circuit to supply driving power to an actuator of the liquid discharging device mounted on the mounting unit, and a controller configured to supply a first control signal to the driving circuit to drive the actuator of the liquid discharging device to discharge a liquid, and supply a second control signal to the driving circuit after a discharge of the liquid to cause the driving circuit to damage the actuator.

Hereinafter, liquid dispensing apparatuses and liquid discharging devices according to certain example embodiments are described. It should be noted, that the particular embodiments explained below are some possible examples of liquid dispensing apparatuses and chemical liquid discharging devices according to the present disclosure and do not limit the possible configurations, specifications, or the like of liquid dispensing apparatuses and liquid discharging devices according to the present disclosure. The drawings are schematic and are in some instances drawn with exaggeration and omissions for purposes of explanatory convenience. In general, components are not drawn to scale. The number of components, the dimensional ratio between different components, or the like does not necessarily match between different drawings or to actual devices.

### First Embodiment

A discharging system according to a first embodiment discharges a liquid using a piezo jet method. For example, the discharging system discharges several picoliters (pL) to several microliters (µL) of a liquid into a microplate, a multi-well plate or the like according to a user operation. For example, the discharging system is used in a laboratory in a technical field such as biology, chemistry, or pharmacy research.

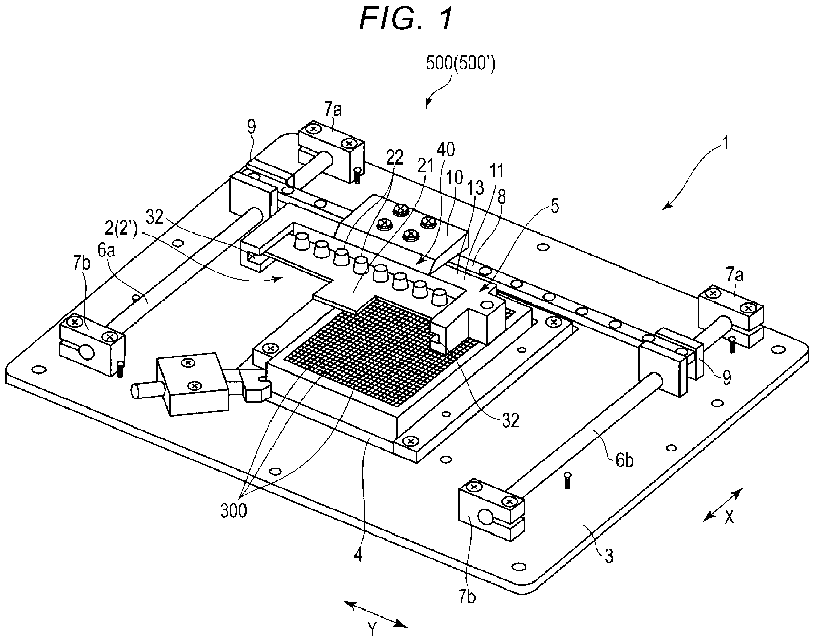

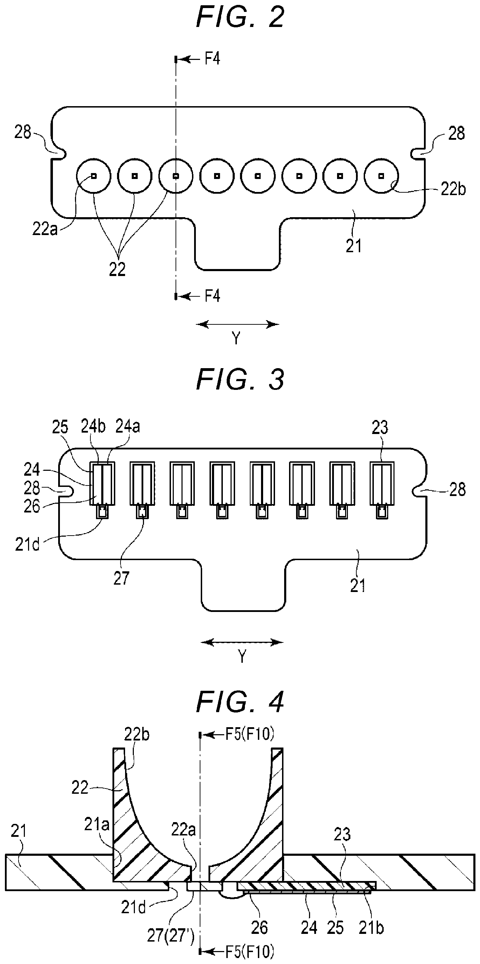

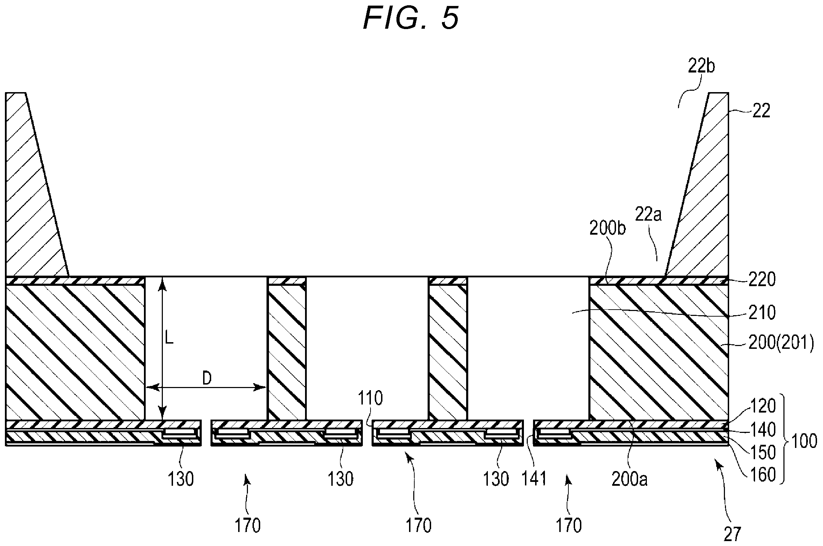

A configuration example of the discharging system according to the first embodiment will be described with reference to FIGS. 1 to 5. FIG. 1 is a schematic perspective view of the discharging system 500. FIG. 2 is a top view of a chemical liquid discharging device 2. FIG. 3 is a bottom view showing a surface of the chemical liquid discharging device 2 from which a liquid is discharged. FIG. 4 is a cross-sectional view taken along a line F4-F4 in FIG. 2. FIG. 5 is a cross-sectional view taken along a line F5-F5 in FIG. 4.

As shown in FIG. 1, the discharging system 500 includes a chemical liquid dispensing apparatus 1, the chemical liquid discharging device 2, a host computer 18, and the like. In addition, the discharging system 500 may have more elements in addition to the elements depicted in FIG. 1, or some of the elements depicted in FIG.1 may be omitted in some embodiments.

The chemical liquid dispensing apparatus 1 controls the chemical liquid discharging device 2 to dispense a liquid from the chemical liquid discharging device 2.

The chemical liquid dispensing apparatus 1 includes a base 3 of a rectangular flat plate shape, and a mounting module 5 (also referred to as a mounting unit) that mounts the chemical liquid discharging device 2. In the first embodiment, it is assumed that the chemical liquid dispensing apparatus 1 discharges the liquid to a microplate 4 having 1536 wells. Here, the front to rear direction of the base 3 is referred to as an X direction, and the right to left direction of the base 3 is referred to as a Y direction. The X direction and the Y direction are orthogonal.

The microplate 4 is fixed to the base 3. The microplate 4 includes a plurality of wells 300. Each well 300 of the microplate 4 holds a predetermined volume of a liquid. For example, the liquids in the microplate can be chemicals, reagents, solutions, solvents, or the like and/or may include cells, blood cells, bacteria, plasma, antibodies, DNA, nucleic acids, or proteins.

The chemical liquid dispensing apparatus 1 includes a pair of right and left X direction guide rails 6a and 6b extending in the X direction on both sides of the microplate 4 on the base 3. Both ends each of the X direction guide rails 6a and 6b are fixed to fixing bases 7a and 7b protruding on the base 3.

A Y direction guide rail 8 extending in the Y direction is installed between the X direction guide rails 6a and 6b. Both ends of the Y direction guide rail 8 are fixed to an X direction moving base 9 that is slidable in the X direction along the X direction guide rails 6a and 6b, respectively.

The Y direction guide rail 8 is provided with a Y direction moving base 10 that allows a mounting module 5 to move in the Y direction along the Y direction guide rail 8. The mounting module 5 is mounted on the Y direction moving base 10. The chemical liquid discharging device 2 is fixed to the mounting module 5.

The chemical liquid discharging device 2 is supported so as to be movable to an arbitrary position in the XY directions orthogonal to each other by a combination of an operation of a movement in the Y direction moving base 10 along the Y direction guide rail 8 in the Y direction and an operation of a movement in the X direction moving base 9 along the X direction guide rails 6a and 6b in the X direction.

In the mounting module 5, a slit 32 for fixing the chemical liquid discharging device 2 is formed. In a case where the chemical liquid discharging device 2 is inserted into the slit 32 from a front surface opening portion side of the slit 32, the chemical liquid discharging device 2 is fixed to the chemical liquid dispensing apparatus 1.

The mounting module 5 includes a driving circuit 11 and a capacitance measuring circuit 40. The driving circuit 11 and the capacitance measuring circuit 40 are described below.

The chemical liquid discharging device 2 discharges the chemical liquid based on a control of the chemical liquid dispensing apparatus 1.

The chemical liquid discharging device 2 includes a base member 21 of a flat planar shape that is a plate of a rectangular plate shape. As shown in FIG. 2, a plurality of chemical liquid holding containers 22 is arranged in a row in the Y direction, on a surface side of the base member 21. In the first embodiment, eight chemical liquid holding containers 22 are included. However, the number is not limited to eight. As shown in FIG. 4, the chemical liquid holding container 22 is a container of a cylindrical shape having a bottom, of which a top surface is opened. A chemical liquid holding container recessed portion 21a of a cylindrical shape is formed at a position corresponding to each chemical liquid holding container 22, on the surface side of the base member 21.

The bottom portion of the chemical liquid holding container 22 is adhered and fixed to the recessed portion 21a. A bottom surface opening portion 22a, serving as a liquid outlet port, is formed at the center position on the bottom portion of the chemical liquid holding container 22. The opening area of a top surface opening portion 22b is larger than the opening area of the bottom surface opening portion 22a of the chemical liquid outlet port.

At both ends of the base member 21, mount fixing notches 28 for mounting and fixing the mounting module 5 are formed respectively. The mount fixing notch 28 is engaged with the mounting module 5. Two notches 28 of the base member 21 are formed in a notch shape of a semi-length cylindrical shape. The mount fixing notch 28 may be a notch shape of a semi-circular shape, a semi-elliptical shape, a triangular shape, or the like. In the first embodiment, the shapes of the two notches 28 are different from each other. Therefore, the left and right shapes of the base member 21 are different, and it is easy to identify the posture of the base member 21.

As shown in FIG. 3, the same number of electrical substrate 23 as the chemical liquid holding container 22 are arranged in row in the Y direction, on a rear surface side of the base member 21. The electrical substrate 23 is a flat plate member of a rectangular shape. As shown in FIG. 4, an electrical substrate recessed portion 21b of a rectangular shape for mounting the electrical substrate 23 and a chemical liquid discharge array portion opening 21d connected with the electrical substrate recessed portion 21b are formed, on the rear surface side of the base member 21. A base end portion of the electrical substrate recessed portion 21b extends to the vicinity of an upper end portion of the base member 21 in FIG. 3 (the position in the vicinity of the right end portion in FIG. 4). As shown in FIG. 4, a distal end portion of the electrical substrate recessed portion 21b extends to a position overlapping a portion of the chemical liquid holding container 22. The electrical substrate 23 is adhered and fixed to the electrical substrate recessed portion 21b.

An electrical substrate wiring 24 is patterned and formed on a surface opposite to an adhesive fixing surface of the electrical substrate recessed portion 21b, on the electrical substrate 23. Wiring patterns 24a and 24b respectively connected to a driving element 130 are formed on the electrical substrate wiring 24.

A control signal input terminal 25 for inputting an electrical signal (also referred to as a driving signal) from the driving circuit 11 is formed at one end portion of the electrical substrate wiring 24. An electrode terminal connection portion 26 is provided at the other end portion of the electrical substrate wiring 24.

The base member 21 is provided with the chemical liquid discharge array portion opening 21d. As shown in FIG. 3, the chemical liquid discharge array portion opening 21d is formed at a position overlapping with the chemical liquid holding container recessed portion 21a on the rear surface side of the base member 21, in an opening portion of a rectangular shape.

A chemical liquid discharge array 27 is adhered and fixed to the bottom surface of the chemical liquid holding container 22 in a state where the chemical liquid discharge array 27 covers bottom surface opening portion 22a of the chemical liquid holding container 22. The chemical liquid discharge array 27 is disposed at a position corresponding to the chemical liquid discharge array portion opening 21d of the base member 21.

As shown in FIG. 5, the chemical liquid discharge array 27 is formed by laminating a nozzle plate 100 and a pressure chamber structure 200. The nozzle plate 100 includes a nozzle 110 that discharges the liquid, a diaphragm 120, the driving element 130 that is a driving unit, an insulation film 140 that insulates the driving element 130, a protection film 150 that is protection layer, a liquid repellant film 160. An actuator 170 includes the diaphragm 120 and the driving element 130. For example, a plurality of nozzles 110 is arranged in 3×3 rows. The plurality of nozzles 110 is positioned inside the bottom surface opening portion 22a of the chemical liquid outlet port of the chemical liquid holding container 22. The chemical liquid holding container 22, the pressure chamber structure 200, the actuator 170, and the like form a discharging portion that discharges the liquid.

For example, the diaphragm 120 is integrated with the pressure chamber structure 200. When a heat treatment is performed on a silicon wafer 201 in an oxygen atmosphere, a SiO₂ (silicon oxide) film is formed on the surface of the silicon wafer 201. The diaphragm 120 uses the SiO₂ film of the surface of the silicon wafer 201. The diaphragm 120 may also be formed by depositing the SiO₂ film on the surface of the silicon wafer 201 by a CVD (Chemical Vapor Deposition) method.

The film thickness of the diaphragm 120 is preferably in a range of 1 to 30 µm. The diaphragm 120 may use a semiconductor material such as SiN (silicon nitride), Al₂O₃ (aluminum oxide), or the like, instead of the SiO₂ film.

The driving element 130 is formed in each nozzle 110. The driving element 130 is an annular shape surrounding the nozzle 110. The shape of the driving element 130 is not limited, and may be, for example, a C shape in which a portion of the circular ring is cut out.

The driving element 130 is electrically connected to the electrode terminal connection portion 26. That is, one surface of the driving element 130 is electrically connected to the wiring pattern 24a. The other surface of the driving element 130 is electrically connected to the wiring pattern 24b.

The driving element 130 is supplied with a voltage by a difference between the voltage applied to the wiring pattern 24a and the voltage applied to the wiring pattern 24b. The driving element 130 is driven with a voltage of a difference therebewteen.

The driving element 130 includes a piezoelectric film that is a piezoelectric material, and uses PZT (Pb (Zr, Ti) O₃: lead zirconate titanate). For example, a piezoelectric film included in the driving element 130 may use a piezoelectric material such as PTO (PbTiO₃: lead titanate), PMNT (Pb (Mg_{1/3}Nb_{2/3})O₃-PbTiO₃), PZNT (Pb (Zn_{1/3}Nb_{2/3})O₃-PbTiO₃), KNN (a compound of KNbO₃ and NaNbO₃), ZnO, and AlN may be used.

The piezoelectric film included in the driving element 130 generates a polarization in the thickness direction. If an electric field in the same direction as the polarization is applied to the driving element 130, the driving element 130 extends or contracts in a direction orthogonal to the electric field direction. That is, the driving element 130 contracts or extends in a direction orthogonal to the film thickness.

The nozzle plate 100 includes the protection film 150. The protection film 150 includes a chemical liquid passage portion 141 of a cylindrical shape that is connected to the nozzle 110 of the diaphragm 120.

The nozzle plate 100 includes the liquid repellant film 160 that covers the protection film 150. For example, the liquid repellant film 160 is formed by spin-coating, for example, a silicone resin having a characteristic of repelling a chemical liquid. The liquid repellant film 160 may also be formed by a fluorinated resin material or the like.

The pressure chamber structure 200 includes a warp reduction film 220 that is a warp reduction layer on a surface opposite to the diaphragm 120. The pressure chamber structure 200 includes a pressure chamber 210 that penetrates the warp reduction film 220, is positioned at the position of the diaphragm 120, and is connected to the nozzle 110. For example, the pressure chamber 210 is formed in a circular shape positioned in the same axis as the nozzle 110.

The pressure chamber 210 includes an opening portion connected to the bottom surface opening portion 22a of the chemical liquid holding container 22. It is preferable that the size L in the depth direction of the opening portion of the pressure chamber 210 is larger than the size D in the width direction of the opening portion of the pressure chamber 210. The size L in the depth direction is set to be larger than the size D in the width direction. Therefore, the pressure applied to the liquid in the pressure chamber 210 may delay an escape to the chemical liquid holding container 22 by a vibration of the diaphragm 120 of the nozzle plate 100.

In the pressure chamber structure 200, the side on which the diaphragm 120 of the pressure chamber 210 is disposed is referred to a first surface 200a and the side on which the warp reduction film 220 is disposed is referred to a second surface 200b. The chemical liquid holding container 22 is adhered to the side of the warp reduction film 220 of the pressure chamber structure 200 by, for example, an epoxy type adhesive. The pressure chamber 210 of the pressure chamber structure 200 is connected to the bottom surface opening portion 22a of the chemical liquid holding container 22 by an opening portion of the side of the warp reduction film 220.

The diaphragm 120 deforms in the thickness direction by an operation of the driving element 130 of a surface shape. The chemical liquid discharging device 2 discharges the liquid supplied to the nozzle 110 by a pressure change generated in the pressure chamber 210 of the pressure chamber structure 200 due to the deformation of the diaphragm 120.

The driving circuit 11 drives the chemical liquid discharging device 2 based on a signal from a processor 15 (also referred to as a controller) described below. For example, the driving circuit 11 supplies a signal, electric power, and the like to the chemical liquid discharging device 2 to discharge the liquid from the chemical liquid discharging device 2. That is, the driving circuit 11 supplies a voltage to the wiring patterns 24a and 24b connected to the driving element 130 of the chemical liquid discharging device 2.

The driving circuit 11 connects the wiring patterns 24a and 24b, and the capacitance measuring circuit 40 based on a signal from the processor 15. That is, the driving circuit 11 connects the driving element 130 and the capacitance measuring circuit 40 so that the capacitance measuring circuit 40 can measure the capacitance of the driving element 130.

The capacitance measuring circuit 40 measures the capacitance of the connected configuration. The capacitance measuring circuit 40 is connected to the driving element 130 of the chemical liquid discharging device 2 through the driving circuit 11. The capacitance measuring circuit 40 measures the capacitance of the driving element 130.

The capacitance measuring circuit 40 transmits the measured capacitance to the processor 15.

For example, the capacitance measuring circuit 40 measures the capacitance by measuring the impedance of the connected configuration. The capacitance measuring circuit 40 may transmit the measured impedance to the processor 15. The method of measuring the capacitance by the capacitance measuring circuit 40 is not limited to a specific method.

Next, a control system of the discharging system 500 will be described.

As described above, the discharging system 500 includes the chemical liquid dispensing apparatus 1, the chemical liquid discharging device 2, the host computer 18, and the like.

The host computer 18 controls the chemical liquid dispensing apparatus 1 according to operations of an operator. The host computer 18 includes an operation unit 18a, a display unit 18b, and the like. The host computer 18 includes a processor, a RAM, a ROM, a non-volatile memory (NVM), and the like.

The operation unit 18a receives an input of the operation of the operator. For example, the operation unit 18a is a keyboard, a mouse, a touch panel, or the like.

The display unit 18b displays various kinds of information by a control of the processor 15. For example, the display unit 18b includes a liquid crystal display. If the operation unit 18a includes a touch panel or the like, the display unit 18b may be formed integrally with the operation unit 18a.

The host computer 18 receives various inputs through the operation unit 18a. For example, the host computer 18 receives an input indicating that the chemical liquid holding container 22 has been filled with a liquid. The host computer 18 receives an input selection for discharging the liquid from the chemical liquid holding container 22.

If the host computer 18 receives the input selection for discharging the liquid from the chemical liquid holding container 22, the host computer 18 transmits a discharge signal to the chemical liquid dispensing apparatus 1.

The host computer 18 may receive inputs for each chemical liquid holding container 22. For example, the host computer 18 may receive an input indicating that the filling has been completed and discharging has been instructed separately for each chemical liquid holding container 22.

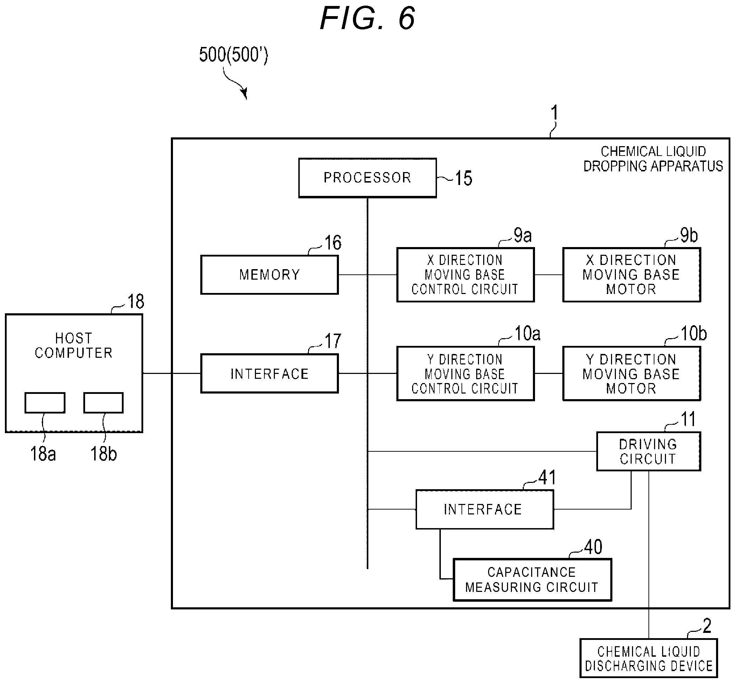

As shown in FIG. 6, the chemical liquid dispensing apparatus 1 includes an X direction moving base control circuit 9a, a X direction moving base motor 9b, a Y direction moving base control circuit 10a, a Y direction moving base motor 10b, the driving circuit 11, the processor 15, a memory 16, an interface 17, the capacitance measuring circuit 40, the interface 41, and the like. Such units are connected to each other through a data bus. The chemical liquid dispensing apparatus 1 may have more elements in addition to the elements depicted in FIG. 6, or some of the elements depicted in Fig. 6 may be omitted in some embodiments.

The processor 15 has a function of controlling all operations of the chemical liquid dispensing apparatus 1. The processor 15 may include an internal cache, various interfaces, and the like. The processor 15 realizes various processes by executing a program stored in advance in the internal cache, the memory 16, or the like.

Some of the various functions realized by the execution of the program by the processor 15 may be realized by a hardware circuit. In this case, the processor 15 controls a function executed by the hardware circuit.

The memory 16 stores various data. For example, the memory 16 stores a control program, a control data, and the like. The control program and the control data are incorporated in advance according to a specification of the chemical liquid dispensing apparatus 1. The control program is a program or the like supporting the function realized by the chemical liquid dispensing apparatus 1.

The memory 16 temporarily stores data or the like under processing of the processor 15. The memory 16 may store data necessary for executing an application program, an execution result of the application program, and the like.

The interface 17 is an interface for transmitting and receiving data to and from the host computer 18. For example, the interface 17 is connected to the host computer 18 through a wired or wireless line. For example, the interface 17 may support a LAN connection, a USB connection, or a Bluetooth® connection.

The X direction moving base control circuit 9a drives the X direction moving base motor 9b based on a signal from the processor 15. The X direction moving base control circuit 9a drives the X direction moving base motor 9b by supplying a signal or electric power to the X direction moving base motor 9b.

The X direction moving base motor 9b moves the X direction moving base 9 in the X direction. For example, the X direction moving base motor 9b is connected to the X direction moving base 9 through a gear or the like and moves the X direction moving base 9 in the X direction.

The Y direction moving base control circuit 10a drives the Y direction moving base motor 10b based on a signal from the processor 15. The Y direction moving base control circuit 10a drives the Y direction moving base motor 10b by supplying a signal or electric power to the Y direction moving base motor 10b.

The Y direction moving base motor 10b moves the Y direction moving base 10 in the Y direction. For example, the Y direction moving base motor 10b is connected to the Y direction moving base 10 through a gear or the like and moves the Y direction moving base 10 in the Y direction.

The interface 41 is an interface for connecting the capacitance measuring circuit 40 and the driving circuit 11. For example, the interface 41 is a connection terminal or the like. Note that, the interface 41 may further connect the capacitance measuring circuit 40 and the processor 15.

The chemical liquid discharging device 2, the driving circuit 11, and the capacitance measuring circuit 40 are as described above.

Next, the function realized by the processor 15 of the chemical liquid dispensing apparatus 1 will be described. The following function is realized by the processor 15 executing the program stored in the memory 16 or the like.

First, the processor 15 has a function of acquiring the capacitance of the actuator 170 of the chemical liquid discharging device 2.

The processor 15 determines whether the chemical liquid discharging device 2 has been set in the mounting module 5. For example, the processor 15 determines whether the chemical liquid discharging device 2 has been set in the mounting module 5 according to a signal from a sensor (not specifically depicted).

Once it has been determined that the chemical liquid discharging device 2 has been set in the mounting module 5, the processor 15 causes the capacitance measuring circuit 40 to measure the capacitance of the actuator 170. That is, the processor 15 causes the capacitance of the driving element 130 to be measured as the capacitance of the actuator 170. The capacitance of the driving element 130 is a capacitance between the wiring pattern 24a and the wiring pattern 24b.

For example, the processor 15 transmits a signal to the driving circuit 11 to connect the driving element 130 and the capacitance measuring circuit 40. The processor 15 acquires the capacitance measured by the capacitance measuring circuit 40.

The processor 15 acquires the capacitance of each actuator 170 (that is the capacitance of each driving element 130) corresponding to each of the chemical liquid holding containers 22.

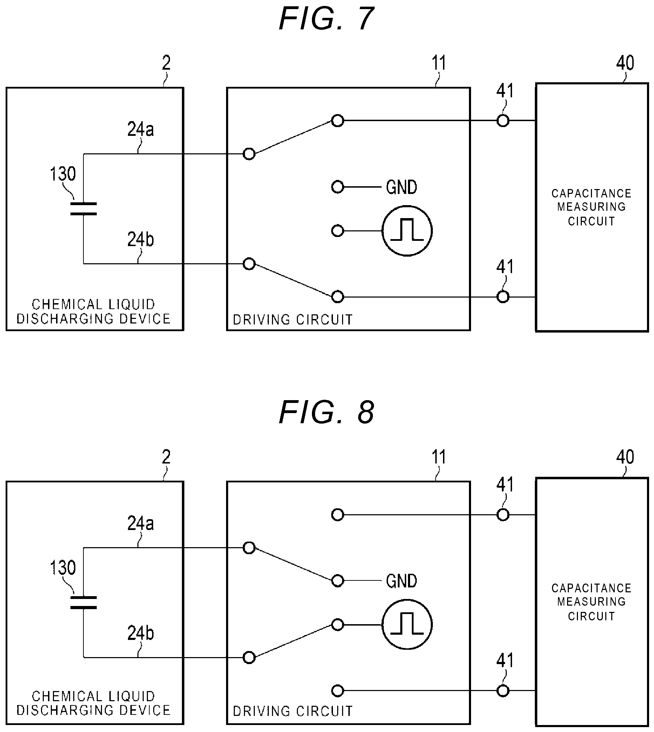

FIG. 7 is a diagram of an example of the connection relationship when the capacitance measuring circuit 40 measures the capacitance of the driving element 130.

As shown in FIG. 7, the capacitance measuring circuit 40 is connected to the driving element 130 through the interface 41 and the driving circuit 11. The capacitance measuring circuit 40 is electrically connected to the wiring patterns 24a and 24b. The capacitance measuring circuit 40 measures the capacitance of the driving element 130 between the wiring pattern 24a and the wiring pattern 24b.

The processor 15 has a further function of determining whether the chemical liquid discharging device 2 has been previously used based on the acquired capacitance value.

The processor 15 can determine whether the actuator 170 is damaged. That is, the processor 15 determines whether the driving element 130 forming the actuator 170 is damaged.

The processor 15 determines whether the driving element 130 is damaged based on the determined capacitance of the driving element 130. When the driving element 130 is not damaged, the wiring pattern 24a and the wiring pattern 24b are electrically connected to each other via the driving element 130. Therefore, the capacitance of the driving element 130 will be a predetermined or expected value for the specific type of the driving element 130. When the driving element 130 is damaged, the wiring pattern 24a and the wiring pattern 24b are not energized. Therefore, the detected capacitance of the driving element 130 becomes essentially 0 or otherwise extremely small.

Therefore, when the acquired capacitance is lower than a threshold value, the processor 15 determines that the driving element 130 is damaged. As a result, the processor 15 determines that the actuator 170 is damaged.

When the acquired capacitance is equal to or greater than a threshold value, the processor 15 determines that the driving element 130 is not damaged. As a result, the processor 15 determines that the actuator 170 is not damaged.

The method by which the processor 15 determines the damage of the actuator 170 is not limited to any specific method.

The processor 15 determines damage for each actuator 170.

The processor 15 determines whether the chemical liquid discharging device 2 has been used, based on the damage state of each actuator 170.

For example, if at least one of the actuators 170 is damaged, the processor 15 determines that the chemical liquid discharging device 2 has been previously used. When none of the actuators 170 are damaged, the processor 15 determines that the chemical liquid discharging device 2 has not been used (that is, unused).

The processor 15 has a function of discharging the liquid from the chemical liquid discharging device 2 based on the determination of whether the chemical liquid discharging device 2 has been used.

When the chemical liquid discharging device 2 has not been used, the processor 15 discharges the liquid from the chemical liquid discharging device 2.

For example, an operator supplies a predetermined amount of the liquid to the chemical liquid holding container 22 from the top surface opening portion 22b of the chemical liquid holding container 22 by a pipette or the like. The liquid is held inside the chemical liquid holding container 22. The bottom surface opening portion 22a of the bottom portion of the chemical liquid holding container 22 is connected to the chemical liquid discharge array 27. The liquid in the chemical liquid holding container 22 is then filled into each pressure chamber 210 of the chemical liquid discharge array 27 through the bottom surface opening portion 22a of the bottom surface of the chemical liquid holding container 22.

The liquid in the chemical liquid discharging device 2 may include any of, for example, a low molecular weight compound, a fluorescent reagent, a protein, an antibody, a nucleic acid, a plasma, a bacteria, a blood cell or a cell. In general, a main solvent of the liquid, that is the substance in the liquid present at the largest weight or volume ratio, is water, glycerin, or dimethylsulfoxide.

When the operator fills the liquid, the operator also makes a selection, via the operation unit 18a, for discharging the liquid. The operator may input the operation for discharging the liquid from a specific chemical liquid holding container 22.

If the host computer 18 receives the instruction for discharging the liquid, the host computer 18 then transmits a discharge signal instructing the discharge of the liquid to the chemical liquid dispensing apparatus 1. The discharge signal may be an instruction for the discharge of the liquid from a specific chemical liquid holding container 22.

The processor 15 receives the discharge signal through the interface 17. If the chemical liquid discharging device 2 has not been used, the processor 15 causes the chemical liquid discharging device 2 to discharge the liquid based on the discharge signal.

The processor 15 controls the X direction moving base motor 9b and the Y direction moving base motor 10b to move the chemical liquid discharging device 2 set in the mounting module 5 to a predetermined position. For example, the processor 15 moves the chemical liquid discharging device 2 to a position where the plurality of nozzles 110 is inserted into a well 300. The processor 15 may move the chemical liquid discharging device 2 to the predetermined position according to the discharge signal.

If the chemical liquid discharging device 2 is moved to the predetermined position, the processor 15 applies a voltage for discharging the liquid to the driving element 130 using the driving circuit 11.

The processor 15 transmits a signal to the driving circuit 11, and a voltage control signal is input from the driving circuit 11 to the driving element 130 as a driving power. In response to the application of the voltage control signal, the driving element 130 deforms the diaphragm 120 to change the volume of the pressure chamber 210. Therefore, the liquid is discharged as a liquid droplet from the nozzle 110 of the chemical liquid discharge array 27. As a result, the chemical liquid discharging device 2 dispenses a predetermined amount of liquid from the nozzle 110 to the well 300 of the microplate 4.

For dispensing the predetermined amount of liquid to each well 300 of the microplate 4, the processor 15 repeats an operation of transmitting a signal to the X direction moving base control circuit 9a, the Y direction moving base control circuit 10a, and the driving circuit 11.

The number of times and the position at which the processor 15 discharges the chemical liquid is not limited to a specific configuration.

If it is determined that the chemical liquid discharging device 2 has not been used, the processor 15 may transmit a signal indicating that the chemical liquid discharging device 2 has not been used to the host computer 18. The host computer 18 may display that the chemical liquid discharging device 2 has not been used on the display unit 18b or the like, based on the corresponding signal.

If it is determined that the chemical liquid discharging device 2 has been previously used, the processor 15 does not discharge the liquid from the chemical liquid discharging device 2.

For example, if the chemical liquid discharging device 2 has been used, the processor 15 does not cause the chemical liquid discharging device 2 to discharge the chemical liquid even if the processor 15 receives the discharge signal. The processor 15 transmits a signal indicating that the chemical liquid discharging device 2 has been used to the host computer 18 through the interface 17.

If the host computer 18 receives the corresponding signal, the host computer 18 displays a warning or the like indicating that the chemical liquid discharging device 2 has been previously used on the display unit 18b or the like.

The processor 15 also has a function of purposively damaging the actuator 170 by use of the driving circuit 11 once the liquid discharge has been completed.

That is, once the discharge of the liquid is completed, the processor 15 physically damages the driving element 130 of the actuator 170 that was used for discharging the liquid. For example, the processor 15 causes the driving element 130 to be damaged by applying a predetermined voltage (referred to as a breakdown voltage) from the driving circuit 11. The driving circuit 11 normally applies a voltage for expanding or contracting the pressure chamber 210 to the driving element 130, however, when damaging the actuator 170, the processor 15 causes the driving circuit 11 to apply a voltage higher than the voltage normally applied during the discharging operation to the driving element 130.

The driving element 130 is damaged by the application of a breakdown voltage or higher. For example, the piezoelectric film included in the driving element 130 is dielectrically broken down by the applied voltage, and thus the capacitance of the driving element 130 becomes about 0 or extremely small relative to an undamaged capacitance value.

The processor 15 may instead break the driving element 130 by applying a pulse voltage or an AC voltage of a predetermined frequency (referred to as a breakdown frequency) to the driving circuit 11. For example, the processor 15 applies a pulse voltage or an AC voltage having the same frequency as the resonance frequency of the driving element 130 to the driving element 130 from the driving circuit 11.

When a voltage of the resonance frequency is applied to the driving element 130, the driving element 130 resonates and is damaged. For example, the driving element 130 is overloaded by resonance and physically breaks.

FIG. 8 is a diagram of an example of the connection relationship when the processor 15 damages the driving element 130 using the driving circuit 11.

As shown in FIG. 8, the driving circuit 11 is connected to the driving element 130. The driving circuit 11 is electrically connected to the wiring patterns 24a and 24b. Here, the wiring pattern 24a is connected to GND.

Based on a signal from the processor 15, the driving circuit 11 applies a voltage that causes the driving element 130 to damage, to the driving element 130.

The method by which the processor 15 damages the driving element 130 is not necessarily limited to any specific method.

Next, an operation example of the processor 15 of the chemical liquid dispensing apparatus 1 will be described.

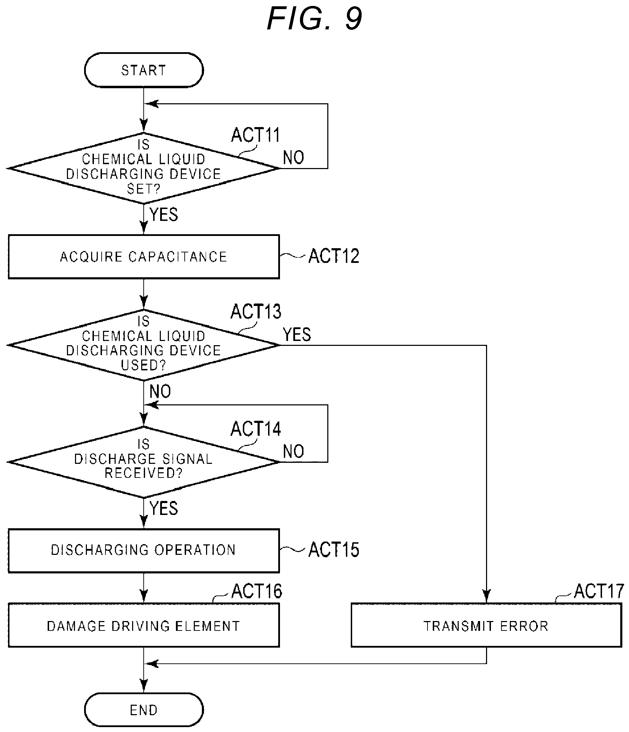

FIG. 9 is a flowchart for describing the operation example of the processor 15 of the chemical liquid dispensing apparatus 1.

First, the processor 15 determines whether the chemical liquid discharging device 2 is set in the mounting module 5 (ACT 11). When it is determined that the chemical liquid discharging device 2 is not set in the mounting module 5 (ACT 11, NO), the processor 15 returns to ACT 11.

When it is determined that the chemical liquid discharging device 2 is set in the mounting module 5 (ACT 11, YES), the processor 15 acquires the capacitance of each actuator 170 (ACT 12). Upon acquiring the capacitance of each driving element 130, the processor 15 determines whether the chemical liquid discharging device 2 has been previously used based on the capacitance of each actuator 170 (ACT 13).

When it is determined that the chemical liquid discharging device 2 has not been used (is previously unused) (ACT 13, NO), the processor 15 determines whether or not the discharge signal has been received through the interface 17 (ACT 14). When it is determined that the discharge signal has not been received through the interface 17 (ACT 14, NO), the processor 15 returns to ACT 14.

When it is determined that the discharge signal has been received through the interface 17 (ACT 14, YES), the processor 15 causes the chemical liquid discharging device 2 to discharge the liquid according to the discharge signal (ACT 15).

When the chemical liquid discharging device 2 has caused to discharge the liquid, the processor 15 damages the driving element 130 (ACT 16).

If it is determined that the chemical liquid discharging device 2 has been used according to the use history (ACT 13, YES), the processor 15 transmits the signal indicating that the chemical liquid discharging device 2 has been used to the host computer 18 through the interface 17 (ACT 17).

If the driving element 130 is damaged (ACT 16), or if the signal indicating that the chemical liquid discharging device 2 has been used is transmitted to the host computer 18 (ACT 17), the processor 15 ends the operation.

The processor 15 may determine whether the chemical liquid holding container 22 of the chemical liquid discharging device 2 has been used. For example, the processor 15 determines that the chemical liquid holding container 22 connected to the damaged driving element 130 has been used.

Once it is determined whether each chemical liquid holding container 22 has been used, the processor 15 receives the discharge signal from the host computer 18 at a predetermined timing. Here, the discharge signal instructs the discharge of the liquid from a chemical liquid holding container 22. If the chemical liquid holding container 22 that discharges the liquid has not been used, the processor 15 discharges the liquid from the chemical liquid holding container 22 according to the discharge signal. When the discharge operation has completed, the processor 15 purposively damages the driving element 130 that was used for discharging liquid from the chemical liquid holding container 22.

If the chemical liquid holding container 22 that discharges the liquid has been used, the processor 15 will not perform the discharge operation even when the processor 15 receives the discharge signal. In this case, the processor 15 may transmit a signal indicating that the corresponding chemical liquid holding container 22 has been previously used to the host computer 18.

The discharging system in the example embodiment described above measures the capacitance of a piezoelectric film of the liquid discharging device. The discharging system checks whether the liquid discharging device has been used based on capacitance measurements. The discharging system does not discharge the liquid from the liquid discharging device when the liquid discharging device has been previously used.

The discharging system purposively damages the piezoelectric film once the liquid discharging device has completed the discharge operation of the liquid.

As a result, the discharging system can prevent the discharge of a liquid via the reuse of a liquid discharging device that has been previously used.

### Second Embodiment

A chemical liquid discharging device according to a second embodiment is different from that of the first embodiment in that the liquid discharging device according to the second embodiment discharges the liquid by a thermal jet method. The same reference numerals are used for the components that are substantially the same as those of the first embodiment, and detailed descriptions of repeated components may be omitted.

The discharging system 500' according to the second embodiment includes a chemical liquid discharging device 2'.

The chemical liquid discharging device 2' includes a chemical liquid discharge array 27' in place of the chemical liquid discharge array 27.

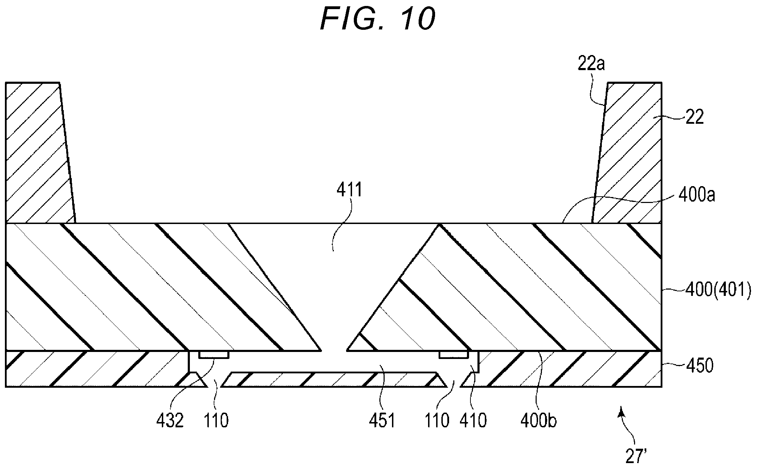

FIG. 10 is a cross-sectional view taken along a line F10-F10 of FIG. 4 according to a second embodiment.

As shown in FIG. 10, the chemical liquid discharge array 27' is formed by laminating a silicon substrate 400 and a photosensitive resin 450. An inlet port 411 connected to the bottom surface opening portion 22a of the chemical liquid outlet port of the chemical liquid holding container 22 is formed on a surface side (referred to as a second surface 400a) of the silicon substrate 400. A thin film heat transfer heater 432 that is an actuator and a wiring that is connected to the thin film heat transfer heater 432 (not specifically depicted in the drawing) are formed on a rear surface side (referred to as a first surface 400b) of the silicon substrate 400. The thin film heat transfer heater 432 is electrically connected to the electrode terminal connection portion 26 and electrically connected to the wiring patterns 24a and 24b.

The photosensitive resin 450 is a substrate on which a pressure chamber 410 is formed. A flow path 451 connected to the inlet port 411, the pressure chamber 410, and the nozzle 110 are formed on the photosensitive resin 450. The pressure chamber 410 is an area where the thin film heat transfer heater 432 is formed in the flow path 451. The thin film heat transfer heater 432 generates heat by electric power supplied from the wiring patterns 24a and 24b. The liquid in the pressure chamber 410 is heated and boiled by the thin film heat transfer heater 432, and thus the liquid is discharged from the nozzle 110.

For example, a plurality of nozzles 110 is arranged in six rows in the X direction and two rows in the Y direction. The plurality of nozzles 110 is positioned in the inside of the bottom surface opening portion 22a of the chemical liquid outlet port of the chemical liquid holding container 22.

The capacitance measuring circuit 40 measures the capacitance of the connected configuration. In the second embodiment, the capacitance measuring circuit 40 is connected to the thin film heat transfer heater 432 of the chemical liquid discharging device 2' through the driving circuit 11. The capacitance measuring circuit 40 measures the capacitance of the thin film heat transfer heater 432.

The capacitance measuring circuit 40 transmits the measured capacitance to the processor 15.

Next, an operation of discharging the liquid will be described. The bottom surface opening portion 22a of the lower portion of the chemical liquid holding container 22 is connected to the inlet port 411 and the flow path 451 of the chemical liquid discharge array 27'. The liquid held in the chemical liquid holding container 22 is filled from the bottom surface opening portion 22a of the chemical liquid holding container 22 to each pressure chamber 410 in the flow path 451 formed on the photosensitive resin 450 through the inlet port 411 formed on the silicon substrate 400.

In this state, the voltage control signal input to the control signal input terminal 25 of the wiring patterns 24a and 24b from the driving circuit 11 is applied to a plurality of thin film heat transfer heater 432 of the chemical liquid discharge array 27'. Therefore, the plurality of thin film heat transfer heaters 432 generates heat, and the chemical liquid in the pressure chamber 410 is heated and boiled. As a result, the chemical liquid is discharged from the nozzle 110 as a chemical liquid droplet. A predetermined amount of chemical liquid is dispensed from the nozzle 110 to the well 300 of the microplate 4.

In the thermal jet method, the liquid comes into contact with the thin film heat transfer heater 432 having a temperature equal to or higher than 300°C. Therefore, in the thermal jet method, it is preferable that the liquid have a high thermal resistance (that is, not be a material that is substantially deteriorated by contact with a heater having a temperature equal to or higher than 300°C).

Next, the function realized by the processor 15 of the chemical liquid dispensing apparatus 1 will be described. The following function is realized by the processor 15 executing the program stored in the memory 16 or the like.

First, the processor 15 has a function of acquiring capacitance of the actuator (thin film heat transfer heater 432) of the chemical liquid discharging device 2'.

The processor 15 determines whether the chemical liquid discharging device 2' is set in the mounting module 5. When it is determined that the chemical liquid discharging device 2' is set in the mounting module 5, the processor 15 causes the capacitance measuring circuit 40 to measure the capacitance of the actuator. That is, the processor 15 measures the capacitance of the thin film heat transfer heater 432 as the capacitance of the actuator. The capacitance of the thin film heat transfer heater 432 is a capacitance between the wiring pattern 24a and the wiring pattern 24b.

For example, the processor 15 transmits a signal to the driving circuit 11 to connect the thin film heat transfer heater 432 and the capacitance measuring circuit 40. The processor 15 acquires the capacitance measured by the capacitance measuring circuit 40.

The processor 15 acquires the capacitance of each actuator (each thin film heat transfer heater 432) corresponding to each chemical liquid holding container 22.

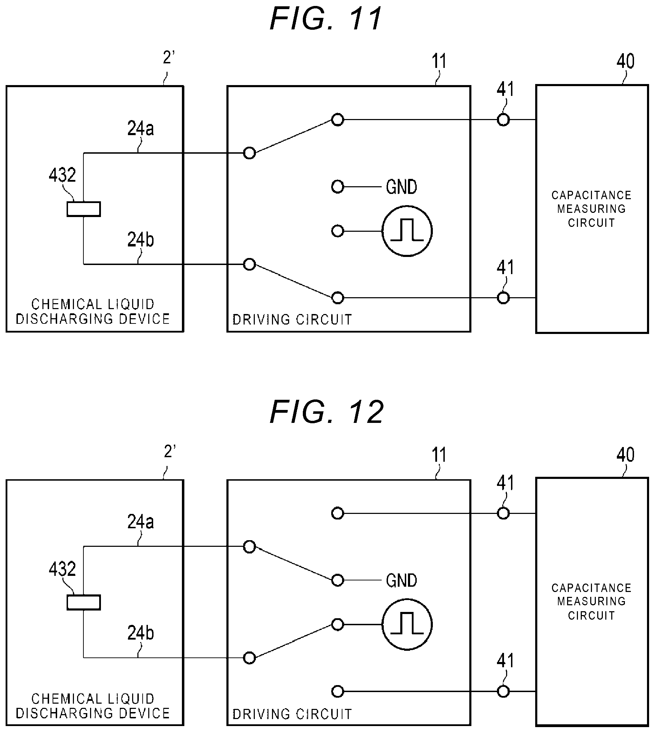

FIG. 11 is a diagram of an example of the connection relationship when the capacitance measuring circuit 40 measures the capacitance of the thin film heat transfer heater 432.

As shown in FIG. 11, the capacitance measuring circuit 40 is connected to the thin film heat transfer heater 432 through the interface 41 and the driving circuit 11. The capacitance measuring circuit 40 is electrically connected to the wiring patterns 24a and 24b. The capacitance measuring circuit 40 measures the capacitance of the thin film heat transfer heater 432 between the wiring pattern 24a and the wiring pattern 24b.

The processor 15 has a function of determining whether the chemical liquid discharging device 2' has been used, based on the acquired capacitance.

The processor 15 determines whether the thin film heat transfer heater 432, corresponding to the actuator, is damaged. The processor 15 determines whether the thin film heat transfer heater 432 is damaged based on the capacitance of the thin film heat transfer heater 432. When the thin film heat transfer heater 432 is not damaged, the wiring pattern 24a and the wiring pattern 24b are electrically connected to each other via the thin film heat transfer heater 432. Therefore, the capacitance of the thin film heat transfer heater 432 is a predetermined value. When the thin film heat transfer heater 432 is damaged, the wiring pattern 24a and the wiring pattern 24b are not energized. Therefore, the acquired capacitance of the thin film heat transfer heater 432 is essentially 0 or otherwise extremely small.

Therefore, when the acquired capacitance is smaller than the threshold value, the processor 15 determines that the thin film heat transfer heater 432 is damaged. When the acquired capacitance is equal to or greater than the threshold value, the processor 15 determines that the thin film heat transfer heater 432 is not damaged.

The method by which the processor 15 determines the damage state of the actuator (thin film heat transfer heater 432) is not limited to a specific method.

The processor 15 determines whether each thin film heat transfer heater 432 has been damaged.

The processor 15 determines whether the chemical liquid discharging device 2' has been previously used, on the basis of the damage state of each thin film heat transfer heater 432.

For example, when at least one thin film heat transfer heater 432 is damaged, the processor 15 determines that the chemical liquid discharging device 2' has been used. When none of the thin film heat transfer heaters 432 is damaged, the processor 15 determines that the chemical liquid discharging device 2' has not been used (unused).

The processor 15 has a function of discharging the chemical liquid from the chemical liquid discharging device 2' based on the determination result of whether the chemical liquid discharging device 2' has been used.

When the chemical liquid discharging device 2' has not been used, the processor 15 discharges the liquid from the chemical liquid discharging device 2'. The operation in which the processor 15 causes the chemical liquid discharging device 2' to discharge the chemical liquid is the same as in the first embodiment, and the explanation thereof will not be repeated.

When the chemical liquid discharging device 2' has been used, the processor 15 does not discharge the liquid from the chemical liquid discharging device 2'.

For example, when the chemical liquid discharging device 2' has been previously used, the processor 15 does not discharge the chemical liquid even when receiving the discharge signal. The processor 15 transmits a signal to the host computer 18 via the interface 17, the signal indicating that the chemical liquid discharging device 2' has been used.

When the host computer 18 receives the corresponding signal, the host computer 18 displays a warning or the like indicating that the chemical liquid discharging device 2' has been used on the display unit 18b or the like.

The processor 15 has a function of purposively damaging the thin film heat transfer heater 432 once the liquid has been completely discharged.

That is, when the discharge of the chemical liquid is completed, the processor 15 physically damages the thin film heat transfer heater 432 used for discharging the chemical liquid. The processor 15 applies a voltage higher than the voltage applied in the discharging operation to the thin film heat transfer heater 432.

The thin film heat transfer heater 432 is damaged by the applied voltage. For example, the thin film heat transfer heater 432 is heated by the applied voltage and burnt out.

FIG. 12 is a diagram of an example of a connection relationship when the processor 15 damages the thin film heat transfer heater 432 using the driving circuit 11.

As shown in FIG. 12, the driving circuit 11 is connected to the thin film heat transfer heater 432. The driving circuit 11 is electrically connected to the wiring patterns 24a and 24b. Here, the wiring pattern 24a is connected to GND.

The driving circuit 11 applies a voltage to the thin film heat transfer heater 432 to damage the thin film heat transfer heater 432, based on a signal from the processor 15.

The method by which the processor 15 damages the thin film heat transfer heater 432 is not limited to a specific method.

Next, an operation example of the processor 15 of the chemical liquid dispensing apparatus 1 will be described.

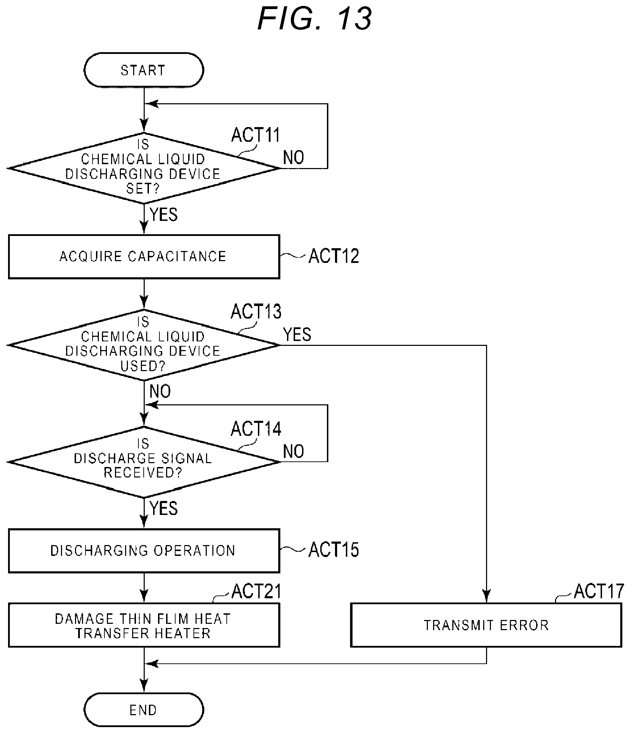

FIG. 13 is a flowchart for explaining an operation example of the processor 15 of the chemical liquid dispensing apparatus 1.

The ACTs 11 to 15 and 17 are the same as those of the first embodiment, and the description thereof will not be repeated.

When the chemical liquid is discharged to the chemical liquid discharging device 2', the processor 15 damages the thin film heat transfer heater 432 (ACT 21). When the thin film heat transfer heater 432 is damaged, the processor 15 ends the operation.

The discharging system configured as described above measures the capacitance of the thin film heat transfer heater of the liquid discharging device. The discharging system checks whether the liquid discharging device has been previously used based on capacitance. The discharging system does not discharge the liquid from the liquid discharging device once the liquid discharging device has been used.

In the discharging system, when the chemical liquid discharging device discharges the chemical liquid, the thin film heat transfer heater is damaged.

As a result, the discharging system can prevent the discharge of the liquid via a chemical liquid discharging device that has already been used once.

The liquid discharging device configured as described above has a simpler structure compared to a piezo jet method, and thus it is possible to miniaturize the actuator. Therefore, the liquid discharging device can dispose the nozzles at higher density as compared to the piezo jet method.

In the example embodiments described above, the driving element 130 that is the driving unit has a circular shape, however, the shape of the driving unit is not limited. For example, the shape of the driving unit may be a diamond shape, an ellipse shape, or the like. The shape of the pressure chamber 210 is not limited to a circular shape, and the shape of the pressure chamber 210 may be a diamond shape, an ellipse shape, a rectangular shape, or the like.

In the example embodiments described above, the nozzle 110 is disposed at the center of the driving element 130. However, as long as the chemical liquid of the pressure chamber 210 is able to be discharged, the position of the nozzle 110 is not limited. For example, the nozzle 110 may be formed the outside of the driving element 130 rather than the inside of the area of the driving element 130.

While certain embodiments have been described, these embodiments have been presented by way of example only, and are not intended to limit the scope of the inventions. Indeed, the novel embodiments described herein may be embodied in a variety of other forms. Furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A liquid dispensing apparatus, comprising:
a mounting unit on which a liquid discharging device is to be mounted;
a driving circuit to supply driving power to an actuator of the liquid discharging device mounted on the mounting unit; and
a controller configured to:
supply a first control signal to the driving circuit to drive the actuator of the liquid discharging device to discharge a liquid; and
supply a second control signal to the driving circuit after a discharge of the liquid to cause the driving circuit to damage the actuator.

2. The liquid dispensing apparatus according to claim 1, wherein the driving circuit supplies a first driving voltage signal in response to the first control signal and a second driving voltage signal in response to the second control signal, the second driving voltage signal having a maximum voltage level greater than a maximum voltage level of the first driving voltage signal and the maximum voltage level of the second driving voltage signal is sufficient to cause a dielectric breakdown in the actuator.

3. The liquid dispensing apparatus according to claim 1, wherein the driving circuit supplies a first driving voltage signal in response to the first control signal and a second driving voltage signal in response to the second control signal, the second driving voltage signal having a frequency coinciding with a resonance frequency of the actuator.

4. The liquid dispensing apparatus according to any one of claims 1 to 3, further comprising:
a capacitance measuring circuit configured to measure a capacitance value of the actuator, wherein
the controller is configured to acquire a capacitance value with the capacitance measuring circuit before supplying the first control signal and supply the first control signal only if the capacitance value is above a predetermined threshold.

5. The liquid dispensing apparatus according to claim 4, further comprising:
an interface for connecting the capacitance measuring circuit and the driving circuit, wherein
the liquid discharging device comprises a pair of wiring patterns for connecting the driving circuit and the actuator, and
the capacitance measuring circuit measures a capacitance value between the pair of wiring patterns.

6. The liquid dispensing apparatus according to any one of claims 1 to 5, wherein the actuator is formed of a piezoelectric film or a heater.

7. A liquid dispensing apparatus, comprising:
a liquid discharging device;
a mounting unit on which the liquid discharging device is mounted;
a driving circuit to supply driving power to the liquid discharging device mounted on the mounting unit; and
a controller configured to supply:
a first control signal to cause the liquid discharging device to discharge a liquid, and
a second control signal to damage the liquid discharging device, wherein
the liquid discharging device comprises an actuator configured to discharge a liquid based on the first control signal from the controller.

8. The liquid dispensing apparatus according to claim 7, wherein the driving circuit supplies to the actuator:
a first driving voltage signal in response to the first control signal,
a second driving voltage signal in response to the second control signal,
the second driving voltage signal has a maximum voltage level greater than a maximum voltage level of the first driving voltage signal and the maximum voltage level of the second driving voltage signal is sufficient to cause a dielectric breakdown in the actuator.

9. The liquid dispensing apparatus according to claim 7, wherein the driving circuit supplies a first driving voltage signal in response to the first control signal and a second driving voltage signal in response to the second control signal, the second driving voltage signal having a frequency coinciding with a resonance frequency of the actuator.

10. The liquid dispensing apparatus according to any one of claims 7 to 9, further comprising:
a capacitance measuring circuit configured to measure a capacitance value of the actuator, wherein
the controller is configured to acquire a capacitance value with the capacitance measuring circuit before supplying the first control signal and supply the first control signal only if the capacitance value is above a predetermined threshold.

11. The liquid dispensing apparatus according to claim 10, further comprising:
an interface for connecting the capacitance measuring circuit and the driving circuit, wherein
the liquid discharging device comprises a pair of wiring patterns for connecting the driving circuit and the actuator, and
the capacitance measuring circuit measures a capacitance value between the pair of wiring patterns.

12. A method for discharging a liquid from a liquid dispensing apparatus, comprising:
determining a liquid discharging device is mounted on a liquid dispensing apparatus;
acquiring a capacitance value of an actuator of the liquid discharging device;
receiving a discharge signal through an interface;
supplying a first control signal to a driving circuit of the liquid dispensing apparatus to drive the actuator of the liquid discharging device to discharge a liquid only if the acquired capacitance value is above a predetermined threshold; and
supplying a second control signal to damage the actuator after a discharge of the liquid.

13. The method according to claim 12, wherein the driving circuit supplies a first driving voltage signal in response to the first control signal and a second driving voltage signal in response to the second control signal, the second driving voltage signal having a maximum voltage level greater than a maximum voltage level of the first driving voltage signal and the maximum voltage level of the second driving voltage signal is sufficient to cause a dielectric breakdown in the actuator.

14. The method according to claim 12, wherein the driving circuit supplies a first driving voltage signal in response to the first control signal and a second driving voltage signal in response to the second control signal, the second driving voltage signal having a frequency coinciding with a resonance frequency of the actuator.

15. The method according to any one of claims 12 to 14, further comprising:
transmitting a signal indicating the liquid dispensing apparatus has been used through the interface if the acquired capacitance value is below the predetermined threshold.
